(19) Europäisches Patentamt
European Patent Office
Office européen des brevets

(11) EP 1 612 042 B1

(12) **EUROPEAN PATENT SPECIFICATION**

(45) Date of publication and mention of the grant of the patent:
**04.05.2011 Bulletin 2011/18**

(21) Application number: **04718743.0**

(22) Date of filing: **09.03.2004**

(51) Int Cl.:
***B32B 27/20*** (2006.01) ***G02B 1/10*** (2006.01)
***G02B 5/23*** (2006.01) ***G02C 7/10*** (2006.01)
***C09K 9/02*** (2006.01)

(86) International application number:
**PCT/JP2004/003049**

(87) International publication number:
**WO 2004/080714 (23.09.2004 Gazette 2004/39)**

(54) **PHOTOCHROMIC MULTILAYER BODY AND METHOD FOR PRODUCING SAME**

PHOTOCHROMER MEHRSCHICHTKÖRPER UND HERSTELLUNGSVERFAHREN DAFÜR

CORPS PHOTOCHROME MULTICOUCHE ET PROCEDE DE PRODUCTION

(84) Designated Contracting States:
**AT BE BG CH CY CZ DE DK EE ES FI FR GB GR HU IE IT LI LU MC NL PL PT RO SE SI SK TR**

(30) Priority: **10.03.2003 JP 2003062756**

(43) Date of publication of application:
**04.01.2006 Bulletin 2006/01**

(73) Proprietor: **Tokuyama Corporation**
**Shunan-shi, Yamaguchi-ken 745-8648 (JP)**

(72) Inventors:
- **IZUMI, Shinobu**
  **Shunan-shi,**
  **Yamaguchi 745-8648 (JP)**
- **MOMODA, Junji**
  **Shunan-shi,**
  **Yamaguchi 745-8648 (JP)**

(74) Representative: **Benson, John Everett et al**
**J. A. Kemp & Co.**
**14 South Square**
**Gray's Inn**
**London WC1R 5JJ (GB)**

(56) References cited:
**EP-A2- 0 082 115**
**WO-A-98/30923**
**JP-A- 4 075 054**
**JP-A- 4 279 691**
**JP-A- 60 053 938**
**JP-A- 61 211 382**
**JP-A- 61 271 382**
**JP-A- 2002 341 297**
**JP-A- 2002 363 480**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

(Technical Field)

The present invention relates to a photochromic laminate obtained by forming a photochromic coating on the surfaces of a base material such as a plastic lens.

(Background Art)

Photochromic spectacles are the ones that work as sunglasses being quickly colored when used outdoors where light containing ultraviolet rays like sunlight is falling and work as ordinary transparent spectacles with their color fading when used indoors where no such light is falling, and are finding ever increasing demands in recent years.

As the methods of producing photochromic plastic lenses, there have been known an imbibition method, a coating method and an in mass method. The imbibition method is to imbibe the surfaces of the plastic lens with a photochromic compound. The coating method is to form by coating a resin layer (photochromic coating) containing a photochromic compound on the surfaces of the plastic lens, and the in mass method is to directly obtain a photochromic lens by dissolving a photochromic compound in a monomer and polymerizing the monomer in this state. Among these methods, the coating method has an advantage in that it in principle is capable of easily imparting photochromic properties to any base material (lens) as compared to the other two methods. In the imbibition method, for example, the lens which is the base material must be soft enough enabling the photochromic compound to be easily diffused. In the in mass method, it is necessary to use a special monomer composition to express good photochromic properties. In the coating method, however, there is no such limitation on the base material.

There have heretofore been known the following coating methods (i) to (iv). The photochromic compound-containing curable resin compositions used as the coating compositions in the following methods will, hereinafter, be called "photochromic coating agents".

(i) A method wherein a photochromic coating agent prepared by dissolving a photochromic compound in an urethane oligomer is applied to the surfaces of a lens and is cured (see leaflet of International Laid-Open No. 98/37115).

(ii) A method wherein a photochromic coating agent prepared by dissolving a photochromic compound in a polymerizable monomer composition of a combination of monofunctional, difunctional and polyfunctional radically polymerizable monomers, is applied to the surfaces of a lens and is cured (U.S. Patent No. 5914174).

(iii) A method wherein a photochromic coating agent prepared by dissolving a photochromic compound in a monomer composition of a combination of two or more kinds of bifunctional (meth)acrylic monomers only, is applied to the surfaces of a lens and is cured (see leaflet of International Laid-Open No. 01/02449).

(iv) A method wherein a photochromic coating agent comprising an N-alkoxymethyl(meth)acrylamide, a catalyst (preferably, an acidic catalyst) and a photochromic compound, is applied onto the surfaces of a lens and is thermally cured (see leaflet of International Laid-Open No. 00/36047).

These photochromic coating agents, usually, contain an organic solvent or a (meth)acrylic monomer, and can be applied to the three-dimensionally crosslinked resin materials having relatively strong resistance against the organic solvent. When applied to the thermoplastic resin materials (e.g., polycarbonate materials) without three-dimensional crosslinkling, however, the above photochromic coating agents cause a problem of impairing the optical properties of the base materials. Namely, application of the above photochromic coating agents causes the thermoplastic resin base material to be whitened, swollen or partly dissolved, deteriorating the surface state of the base material.

In order to solve the above problem, it can be contrived to form a protection layer (e.g., thermosetting silicon-type hard coating containing inorganic particles) on the surfaces of the thermoplastic resin base material so will not to impair the optical properties of the base material and to apply a photochromic coating agent on the surface of the protection layer. In this case, a drop in the optical properties can be prevented. However, the adhesiveness is low between the protection layer and the photochromic coating formed by applying the photochromic coating agent, and the durability is not satisfactory.

Document WO98/30923 A discloses an optical element comprising a substrate, a transparent coating containing a photochromic material, an inorganic network of a silicon-oxide and an organic polymer which is chemically bonded to the organic network via Si-C bonds.

(Disclosure of the Invention)

It is therefore an object of the present invention to provide a photochromic laminate having favorable optical properties, photochromic properties and durability by forming a photochromic coating having good adhesiveness on the

base material of a thermoplastic resin having transparency, such as a plastic lens, and a method of producing the same.

According to the present invention, there is provided a photochromic laminate comprising a base material of a thermoplastic resin having light transmitting property, which thermoplastic resin is a polycarbonate, a crosslinked resin layer formed on the surfaces of the base material and containing inorganic colloidal particles in an amount of 20 to 40% by mass, and a photochromic coating formed on the surfaces of the crosslinked resin layer.

In the photochromic laminate of the present invention, it is desired that:

(1) When the photochromic laminate is immersed in water boiling at 100°C for 1 hour and is, thereafter, held in an atmosphere of 20°C for 30 minutes, the peeling strength between the photochromic coating and the crosslinked resin layer is not smaller than 95/100 as judged by a tessellate-peeling testing using a tape (JIS D 0202-1988); and
(2) The base material is a lens.

According to the present invention, there is further provided a method of producing a photochromic laminate comprising the steps of:

preparing a curable primer composition of the nonsolvent type containing inorganic colloidal particles having a radically polymerizable group introduced onto the surfaces thereof in an amount of 20 to 40% by mass calculated as an inorganic metal oxide and, further, containing a polyfunctional radically polymerizable monomer;
forming a primer coating on the surfaces of a base material of a thermoplastic resin having light-transmitting property, which thermoplastic resin is a polycarbonate, by applying the curable primer composition thereon;
half-curing the primer coating;
applying a polymerizable photochromic composition containing a photochromic compound and a radically polymerizable monomer on the primer coating in the half-cured state; and
forming a photochromic coating on the surfaces of the base material via a crosslinked resin layer by completely curing the primer coating in the half-cured state and polymerizing the polymerizable photochromic composition.

In the production method of the present invention, it is desired that:

(1) The surfaces of the primer coating in the half-cured state is, as required, subjected to the surface treatment for introducing active groups or to the physical etching treatment prior to applying the polymerizable photochromic composition thereon; and
(2) The curable primer contains an urethane oligomer in an amount of 5 to 60% by mass.

The photochromic laminate of the present invention has a photochromic coating formed thereon via a crosslinked resin layer containing inorganic colloidal particles of a particular amount. Despite of being produced by the coating method, therefore, the photochromic laminate of the present invention exhibits favorable photochromic property without losing optical properties of the thermoplastic resin base material.

In the production method of the present invention, further, a layer of a crosslinked resin is formed on the surfaces of the thermoplastic resin base material by using a curable primer composition which contains inorganic colloidal particles having a radically polymerizable group introduced onto the surfaces thereof in a predetermined amount but without containing organic solvent, making it possible to effectively avoid a drop in the optical properties of the thermoplastic resin base material. Further, the polymerizable photochromic composition (hereinafter often referred to simply as photochromic composition) is applied in a state where the curable primer composition is in a half-cured state, thereby to completely cure the curable primer composition and to polymerize the photochromic composition at one time making it possible to form the photochromic coating maintaining good adhesiveness. That is, when the photochromic laminate of the present invention obtained by the above production method is immersed in water boiling at 100°C for 1 hour and is, thereafter, held in an atmosphere of 20°C for 30 minutes, the peeling strength between the photochromic coating and the crosslinked resin layer is not smaller than 95/100 and, particularly, not smaller than 98/100 as judged by a tessellate-peeling testing using a tape (JIS D 0202-1988), the photochromic coating exhibiting a high adhesiveness and excellent durability.

The peeling strength judged relying upon the tessellate-peeling testing is represented by the number of squares that are not peeled off by the adhesive tape among 100 squares engraved on the surface of the laminate. The peeling strength of 95/100 indicates that 95 squares are remaining without being peeled.

The photochromic laminate of the present invention is very useful as, for example, photochromic spectacle lenses and, particularly, as photochromic spectacle lenses in which the base material of the lenses is a polycarbonate.

(Best Mode for Carrying Out the Invention)

(Production of a photochromic laminate)

If briefly described, the photochromic laminate of the present invention is produced by preparing a curable primer composition for forming a crosslinked resin layer (step of preparing a curable primer), forming a primer coating of the curable primer composition on the surfaces of a base material made of a light-transmitting thermoplastic resin (step of forming a primer coating), half-curing the primer coating (step of half-curing), applying a photochromic composition onto the half-cured primer coating (step of applying a photochromic agent), and effecting the final curing (step of final curing). These steps will now be described successively.

- Step of preparing a curable primer -

A curable primer composition used for forming a crosslinked resin layer is of the nonsolvent type and is prepared without at all using an organic solvent. By using the curable primer composition without containing the organic solvent, it is allowed to avoid deterioration on the surfaces of the thermoplastic resin base material and to prevent a decrease in the optical properties.

(A) Polyfunctional radically polymerizable monomers:

The curable primer includes a polyfunctional radically polymerizable monomer which is bifunctional, trifunctional or more highly functional. As the polyfunctional radically polymerizable monomer, there can be preferably used a polyfunctional (meth)acrylic acid ester represented by, for example, the following formula,

$$\{H_2C{=}C(-R')\ -COO-\}_n-R$$

wherein R is an organic residue having a valency of n, R' is a hydrogen atom or a methyl group, and n is an integer of 2 to 4.

Preferred examples of the group R include aliphatic hydrocarbon groups having a valency of n and aromatic hydrocarbon groups having 6 to 10 carbon atoms having a valency of n. These hydrocarbon groups may have substituents such as halogen atom, hydroxyl group, carboxyl group and acyloxy group. Concrete examples of the polyfunctional (meth)acrylate include the following compounds. Namely, trimethylolpropane trimethacrylate, trimethylolpropane triacrylate, tetramethylolmethane trimethacrylate, tetramethylolmethane triacrylate, trimethylolmethane triethylene glycol triacrylate, pentaerythritol tetramethacrylate, dipentaerythritol hexaacrylate, urethaneoligomer tetraacrylate, urethaneoligomer hexamethacrylate, urethaneoligomer hexaacrylate, polyesteroligomer hexaacrylate, diethylene glycol dimethacrylate, triethylene glycol dimethacrylate, tetraethylene glycol dimethacrylate, tripropylene glycol dimethacrylate, bisphenol A dimethacrylate, 2,2-bis(4-methacryloyloxyethoxyphenyl)propane, hexanediol di(meth)acrylate, and 2,2-bis(4-acryloyloxypolyethylene glycol phenyl)propane.

These polyfunctional (meth)acrylic acid esters can be used in a single kind or in a combination of two or more kinds. From the standpoint of maintaining a high degree of adhesiveness to both the thermoplastic resin base material and the photochromic coating, however, it is desired to use them in two or more kinds in combination. Concretely, the following mixtures are preferably used as the polyfunctional radically polymerizable monomers.

A mixture of hexanediol di(meth)acrylate and pentaerythritol tri(meth)acrylate (weight ratio of 30/70 to 70/30);

A mixture of hexanediol di(meth)acrylate and trimethylolpropane tri(meth)acrylate (weight ratio of 30/70 to 70/30);

A mixture of diethylene glycol di(meth)acrylate and pentaerythritol tri(meth)acrylate (weight ratio of 30/70 to 70/30); and

A mixture of diethylene glycol di(meth)acrylate and trimethylolpropane tri(meth)acrylate (weight ratio of 30/70 to 70/30).

In the present invention, it is desired that the above-mentioned polyfunctional radically polymerizable monomer is contained in an amount of 10 to 80% by mass in the curable primer composition.

(B) Inorganic colloidal particles:

The curable primer composition is blended with inorganic colloidal particles. There is no particular limitation on the inorganic colloidal particles provided they are inorganic particles having a size of the colloidal dimension and do not lower the light-transmitting property of the crosslinked resin layer formed by curing the curable primer composition. From the standpoint of obtaining a crosslinked resin layer having a high degree of transparency and a desired refractive index, however, it is desired to use colloidal particles of silicon, titanium, tin, tungsten, antimony or zirconium alone or

of a composite oxide thereof. Colloidal silica is most preferred.

It is necessary that a radically polymerizable group is introduced onto the surfaces of the inorganic colloidal particles. Upon introducing the radically polymerizable groups onto the surfaces of the inorganic colloidal particles, the inorganic colloidal particles can be uniformly and stably dispersed in the curable primer composition. Besides, the inorganic colloidal particles serve as crosslinking points in the crosslinked resin layer formed by curing the curable primer composition, and exist in a state of being chemically bonded to a matrix resin having a crosslinked structure, exhibiting excellent effect for protecting the thermoplastic resin base material.

In the present invention, the radically polymerizable group is easily introduced onto the surfaces of the inorganic colloidal particles by treating the surfaces of the inorganic colloidal particles with a coupling agent having a radically polymerizable group (concretely, a radically polymerizable group copolymerizable with the above-mentioned polyfunctional radically polymerizable monomer, such as (meth)acryloyl group and vinyl group). The coupling agent is an alkoxide of a metal constituting the inorganic colloidal particles, and is bonded to the surfaces of the inorganic colloidal particles upon the hydrolysis and the condensation reaction. When, for example, colloidal silica is used as inorganic colloidal particles, there can be preferably used the following silane compounds (silyl acrylates) having a (meth)acrylic acid ester group:

$CH_2=CCH_3CO_2-CH_2CH_2-Si\ (OC_2H_5)_3$

$CH_2=CCH_3CO_2-CH_2CH_2-Si\ (OCH_3)_3$

$CH_2=CCH_3CO_2-CH_2CH_2CH_2-Si\ (OC_2H_5)_3$

$CH_2=CCH_3CO_2-CH_2CH_2CH_2-Si\ (OCH_3)_3$

$CH_2=CHCO_2-CH_2CH_2CH_2-Si\ (OC_2H_5)_3$

$CH_2=CCH_3CO_2-CH_2CH_2CH_2CH_2-Si\ (OC_2H_5)_3$

$CH_2=CCH_3CO_2-CH_2CH_2CH_2CH_2-Si\ (OCH_3)_3$

The above coupling agent is usually used in an amount of 5 to 50 parts by mass and, particularly, 15 to 35 parts by mass per 100 parts by mass of the inorganic colloidal particles of which the surfaces are treated. The surface treatment (introduction of the radically polymerizable group) for the inorganic colloidal particles with the coupling agent may be conducted through the step of half-curing that will be described later. In this case, the curable primer composition contains the coupling agent and the inorganic colloidal particles in the form of a mixture.

In the present invention, the curable primer composition is blended with the inorganic colloidal particles having the radically polymerizable group introduced onto the surfaces thereof in an amount of 20 to 40% by mass and, particularly, 25 to 35% by mass calculated as an oxide of a metal element (inclusive of metal element in the coupling agent) constituting the colloidal particles. When the amount of the inorganic colloidal particles is smaller than this range, there occur such inconveniences as a decreased effect for protecting the crosslinked resin layer that is formed and decreased optical properties of the thermoplastic resin base material. When the inorganic colloidal particles are blended in amounts larger than the above range, the adhesiveness is impaired between the crosslinked resin layer and the photochromic coating formed thereon probably because of unnecessarily enhanced chemical stability of the crosslinked resin layer. For example, even when the treatment is effected for introducing the active substrate onto the surfaces of the crosslinked resin layer, it becomes difficult to enhance the adhesiveness to the photochromic coating.

(C) Other blending agents:

The curable primer composition is blended with a photopolymerization initiator in addition to the above components.

Though there is no particular limitation, preferred examples of the photopolymerization initiator include those of the ketone type, such as benzophenone, diethoxyacetophenone, acetophenone, benzyl, benzaldehyde, o-chlorobenzaldehyde, xanthone, thioxanthone and 9,10-phenanthrenequinone, as well as those having a phosphorus atom, such as acylphosphine and diacylphosphine. Concrete examples of the photopolymerization initiator include benzoin, benzoinmethyl ether, benzoinbutyl ether, benzophenol, acetophenone, 4,4'-dichlorobenzophenone, diethoxyacetophenone, 2-hydroxy-2-methyl-1-phenylpropane-1-one, benzylmethylketal, 1-(4-isopropylphenyl)-2-hydroxy-2-methylpropane-1-one, 1-hydroxycyclohexylphenyl ketone, 2-isopropylthioxanthone, bis(2,6-dimethoxybenzoyl-2,4,4-trimethyl-pentylphosphine oxide, bis(2,4,6-trimethylbenzoyl)-phenylphosphine oxide, 2,4,6-trimethylbenzoyldiphenylphosphine oxide,

and 2-benzyl-2-dimethylamino-1-(4-morpholinophenyl)-butanone-1.

It is desired that the photopolymerization initiator is blended in an amount of about 0.2 to about 5% by mass per the whole weight of the curable primer composition.

It is desired to also use, together with the above photopolymerization initiator, a thermal polymerization initiator that will be described later concerning the photochromic composition. The blending amount of the thermal polymerization initiator is also the same as that of the case of the photopolymerization initiator.

In the present invention, the curable primer composition is, further, blended with an urethaneoligomer to more improve the adhesiveness between the crosslinked resin layer and the photochromic coating. As the urethane oligomer, there can be used the one that is used as a coating material for forming a flexible coating. In particular, there can be used a (meth)acrylic acid esterified aliphatic urethane having an urethane segment and a (meth)acryl segment, such as a polyurethane obtained by reacting a polyurethane having a pendant hydroxyl group with an isocyanatoethyl methacrylate, and an urethane acrylate obtained by reacting a hydroxyl-terminated polydimethyloxane, a 2,4-toluene diisocyanate and a 2-hydroxyethyl methacrylate. It is desired that the above urethane oligomer has a number average molecular weight of about 200 to about 50,000, and is blended in an amount of 5 to 60% by weight in the curable primer composition. When pertaining to the above-mentioned polyfunctional radically polymerizable monomer (A) of urethane acrylate such as urethaneoligomer tetraacrylate, urethaneoligomer hexamethacrylate or urethaneoligomer hexaacrylate, the above urethaneoligomer may be used also the above components.

In addition to the above components, there can be further blended an ultraviolet-ray absorbing agent and an antioxidant to enhance the durability of the crosslinked resin layer, as well as a leveling agent to improve smoothness of the coating. As the ultraviolet-ray absorbing agent, there can be exemplified a hydroxybenzophenone compound, a benzotriazole compound, a cyanoacrylate compound and a benzylidene malonate, which can be blended in an amount of 5 to 10% by weight in the curable primer composition. As the antioxidant, there can be used known compounds such as a hindered amine and a hindered phenol. As the leveling agent, there can be used any known compound of the type of silicone, fluorine, acryl or vinyl.

The curable primer composition used in the present invention is prepared by homogeneously mixing the above components together. As the curable primer composition, however, there can be also used coating agents for improving the abrasion resistance and weather-proof property of the base material film disclosed in JP-B-6-99577, USP 4,486,504 and USP 4,478,876, as well as photocurable hard coating agents "UVHC8558" and "UVHC1105" manufactured by GE-Toshiba Silicone Co. placed in the market as Silicone Hard Coat, provided they contain inorganic colloidal particles having a radically polymerizable group on the surfaces thereof, contain a polyfunctional radically polymerizable monomer, and are of the nonsolvent type. When the coating agents placed in the market or taught in the above prior documents are not blended with the above-mentioned urethane oligomer, it is desired to add the urethane oligomer. The above prior documents (JP-B-6-99577, USP 4,486,504, USP 4,478,876) are quite silent about forming a photochromic coating on the layer of the coating agent, or the adhesiveness thereto.

- Step of forming a primer coating -

In the present invention, the above curable primer composition is applied to the surfaces of the light-transmitting thermoplastic resin base material to form a primer coating.

There is no particular limitation on the application means, and there can be employed any known method, such as of dipping, spin-coating or dip-spin-coating. Since the curable primer composition has a photo-curing property, however, it is desired that the application method is based on the spin-coating to avoid the preservation under a condition where light falls for extended periods of time. Namely, the spin-coating method applies the curable primer composition of a required amount only but does not use the curable primer in amounts greater than the required amount.

As the light-transmitting thermoplastic resin base material onto which the curable primer composition is applied, further, there can be used any base material without limitation provided it is made of a polycarbonate resin having transparency. Namely, there can be used, without any limitation, optical materials such as plastic spectacle lenses and windowpanes for houses and automobiles. Lenses of polycarbonate resin are particularly desired from the standpoint of an increased demand for imparting photochromic properties.

The amount of applying the curable primer composition (thickness of the primer coating) is so adjusted that the thickness of the crosslinked resin layer formed by completely curing the composition lies within a predetermined range that will be described later.

Prior to applying the curable primer composition, further, the surfaces of the base material are, as required, treated to enhance the adhesiveness between the surfaces of the base material and the crosslinked resin layer formed by curing the curable primer composition (primer coating). The pretreatment may be a chemical treatment using a basic aqueous solution or an acidic aqueous solution, a plasma treatment using an atmospheric pressure plasma or a low-pressure plasma, a corona discharge treatment, a flame treatment or treatment with UV ozone. The pretreatment is to enhance the adhesiveness to the crosslinked resin layer by introducing an active group such as carbonyl group onto

the surfaces of the base material. The pretreatment can be conducted relying upon a physical etching (e.g., polishing by using a polishing agent). This increases the surface areas of the base material, roughens the surfaces of the base material to enhance the anchoring effect, and heightens the adhesiveness to the crosslinked resin layer.

- Step of half-curing

Next, the primer coating is half-cured by photopolymerization in an environment where dust, humidity or temperature is controlled and further, as required, in an environment substituted with an inert gas. The degree of half-curing is such that the conversion of the monomer in the primer coating becomes 70 to 97% and, preferably, 80% to 95%. Here, to measure the conversion in the primer coating after the step of half-curing, the polycarbonate lens having the crosslinked resin layer is immersed in methylene chloride for two days to extract the unreacted monomer from the crosslinked resin layer and, then, the extracted monomer is identified and determined by using a gas chromatography and a high precision liquid chromatography to find the sum of the unreacted monomer. The conversion is, then, calculated from the following formula,

Conversion (%) = (Total weight (g) of the extracted monomer)/(weight (g) of the monomer applied onto the lens before being polymerized) x 100

If the curing is effected to an excess degree, the adhesiveness is impaired between the crosslinked resin layer and the photochromic coating formed thereon. If the curing is not sufficient, the effect of protection is not sufficient, the surfaces of the base material are whitened or swollen when the photochromic composition is applied onto the coating in a subsequent step, and the optical properties are impaired. Further, it becomes difficult to uniformly apply the photochromic composition and the thickness of the photochromic coating tends to become dispersed.

Light is irradiated for half-curing the primer coating. As a source of light, there can be used a lamp having electrodes, such as metal halide lamp, ultrahigh-pressure mercury lamp, high-pressure mercury lamp, medium-pressure mercury lamp, sterilizing lamp, xenon lamp, carbon arc or tungsten lamp, or a lamp without electrode. Though there is no limitation on the intensity of the irradiated light, it is desired that the intensity of light of 405 nm is not greater than 150 mW/cm$^2$, and is, particularly, 30 to 130 mW/cm$^2$ and, more particularly, 40 to 120 mW/cm$^2$ on the surfaces of the base material, and the curing time is, usually, in a range of 5 seconds to 3 minutes though there is no particular limitation from the standpoint of preventing deformation and discoloration of the base material caused by radiant heat.

The thus formed primer coating of the half-cured state has a high resistance against the solvent, effectively suppresses the surfaces of the base material of the thermoplastic resin of when the photochromic coating agent is applied thereon from being whitened or swollen, and exhibits excellent adhesiveness to the photochromic coating obtained by curing the photochromic composition.

- Step of applying the photochromic agent -

In the present invention, a polymerizable photochromic composition (photochromic composition) is applied onto the primer coating of the half-cured state. Prior to applying the photochromic composition, however, the surfaces of the primer coating in the half-cured state can be pre-treated as, required. Like the above-mentioned pretreatment for the surfaces of the base material, the pretreatment is a chemical treatment using a basic aqueous solution or an acidic aqueous solution, a plasma treatment using an atmospheric pressure plasma or a low-pressure plasma, a corona discharge treatment, a flame treatment or treatment with UV ozone to introduce an active group onto the surfaces, or is a physical etching such as polishing by using a polishing agent to enhance the anchoring effect.

As the photochromic composition, there can be used the known one without any limitation. From the standpoint of photochromic properties, optical properties, solvent resistance of the photochromic coating formed by curing, scratch resistance and adhesiveness, however, it is desired to use the photochromic composition which contains a radically polymerizable monomer (hereinafter called silanol radically polymerizable monomer) having a silanol group or a group that forms a silanol group upon the hydrolysis, amine compound and a photochromic compound. It is further desired that the photochromic composition is blended with a radically polymerizable monomer (maleimide radically polymerizable monomer) including a maleimide group. Upon being blended with the maleimide radically polymerizable monomer, the adhesiveness can be further increased.

As the silanol radically polymerizable monomer, there can be exemplified γ-methacryloyloxypropyltrimethoxysilane, γ-methacryloyloxypropyltriethoxysilane, γ-methacryloyloxypropylmethyldimethoxysilane, (3-acryloxypropyl)dimethylmethoxysilane, (3-acryloxypropyl)methyldimethoxysilane, (3-acryloxypropyl)trimethoxysilane, (methacryloyloxymethyl)dimethylethoxysilane, methacryloyloxymethyltriethoxysilane, methacryloyloxymethyltrimethoxysilane, methacryloyloxypropyldimethylethoxysilane and methacryloyloxypropyldimethylmethoxysilane.

Though there is no particular limitation on the amount of the monomer, it is desired that the monomer is contained in the photochromic composition in an amount of 0.5 to 20% by mass and, particularly, in an amount of 1 to 10% by mass.

As the maleimide radically polymerizable monomer, there can be used 4,4'-diphenylmethanebismaleimide, bis (3-ethyl-5-methyl-4-maleimidephenyl)methane, 2,2-bis[4-(4-maleimidephenoxy)phenyl]propane, m-maleimidebenzoyl-N-hydroxysuccinimide ester, and succineimidyl-4-(N-maleimidemethyl)cyclohexane-1 carboxylate. Though there is no particular limitation on the amount of use, it is desired that the monomer is contained in an amount of 0.05 to 15% by mass and, particularly, 0.1 to 10% by mass in the photochromic composition.

The photochromic composition may further contain any other radically polymerizable monomers in addition to the above silanol radically polymerizable monomer and the maleimide radically polymerizable monomer. As the other radically polymerizable monomer, there can be used trimethylolpropane trimethacrylate, trimethylolpropane triacrylate, tetramethylolmethane trimethacrylate, tetramethylolmethane triacrylate, trimethylolpropane triethyllene glycol triacrylate, pentaerythritol tetramethacrylate, dipentaerythritol hexaacrylate, urethaneoligomer tetraacrylate, urethaneoligomer hexamethacrylate, urethaneoligomer hexaacrylate, polyesteroligomer hexaacrylate, diethyleneglycol dimethacrylate, triethyleneglycol dimethacrylate, tetraethylene glycol dimethacrylate, tripropylene glycol dimethacrylate, bisphenol A dimethacrylate, 2,2-bis(4-methacryloyloxyethoxyphenyl)propane, glycidyl methacrylate, 2,2-bis(4-acryloyloxypolyethylene glycol phenyl)propane having an average molecular weight of 776, and methyl ether polyethylene glycol methacrylate having an average molecular weight of 475. Though there is no particular limitation on the amount of use, the other radically polymerizable monomers can be contained in an amount of 20 to 90% by mass and, particularly, 40 to 80% by mass in the photochromic composition.

As the amine compound contained in the photochromic composition, there can be used triethanolamine, N-methyldiethanolamine, triisopropanolamine, N,N-dimethylaminoethyl methacrylate, and N,N-diethylaminoethyl methacrylate. Though there is no particular limitation on the amount of use, it is desired that the amine compound is contained in an amount of 0.01 to 15% by mass and, particularly, 0.1 to 10% by mass in the photochromic composition. It is considered that the amine compound is playing the role of a catalyst for generating the above-mentioned silanol groups and, hence, works to further improve the adhesiveness between the crosslinked resin layer and the photochromic layer.

As the photochromic compound, further, there can be used naphthopyran derivatives, chromene derivatives, spirooxazine derivatives, spiropyran derivatives and fulgimide derivatives. Though there is no particular limitation on the amount of use, it is desired that the photochromic compound is used in an amount of 0.1 to 30% by mass and, particularly, 1 to 10% by mass in the photochromic composition.

The photochromic composition is further blended with a photopolymerization initiator or a thermal polymerization initiator depending upon the kind of the radical monomer that is used. As the photopolymerization initiator, there can be preferably used those that were blended in the above-mentioned curable primer composition. As the thermal polymerization initiator, there can be used a peroxide, such as benzoyl peroxide, p-chlorobenzoyl peroxide, tert-butylperoxy-2-ethyl hexanoate, tert-butylperoxy dicarbonate, tert-butylperoxy isobutylate and diisopropylperoxy dicarbonate; azo compounds such as azobisisobutylonitrile; and boron compounds such as tributylborane, tributylborane partial oxide, sodium tetraphenylborate, sodium tetrakis(p-fluorophenyl) borate and potassium tetrakis(p-chlorophenyl) borate. It is desired that the polymerization initiator is contained, usually, in an amount of 0.01 to 5% by mass and, particularly, 0.1 to 2% by mass in the photochromic composition though the amount may vary depending upon the kind thereof.

In the present invention, further, it is desired that the photochromic composition contains a coupling agent such as silane coupling agent. This further improves the adhesiveness between the crosslinked resin layer and the photochromic coating. That is, the inorganic colloidal particles in the crosslinked resin layer chemically bond to the coupling agent in the photochromic layer on the interface between the crosslinked resin layer and the photochromic coating, whereby the adhesiveness is further improved between the two layers. As such a coupling agent, there can be used an alkoxysilane compound having an epoxy group. Concrete examples are γ-glycidoxypropyltrimethoxysilane, γ-glycidoxypropylmethyldimethoxysilane or those exemplified in the paragraph of the curable primer composition. In particular, a silane coupling agent is preferred. Desirably, further, the content of the coupling agent is 0.1 to 20% by mass and, particularly, 0.5 to 10% by mass in the photochromic composition.

The photochromic composition containing the above components is adjusted for its viscosity by adjusting the contents of the components to lie within the above-mentioned range; i.e., the viscosity, for example, at 25°C is adjusted to lie in a range of 20 to 1000 cP, particularly, 50 to 800 cP and, more particularly, 70 to 500 cP from the standpoint of applicability. Usually, the photochromic composition is so applied that the photochromic coating layer obtained by curing the photochromic composition has a thickness of 10 to 100 μm and, particularly, 20 to 50 μm. For example, a coating agent for hard coating that is generally used for plastic lenses contains a solvent for obtaining a thin and uniform film, and its viscosity at 25°C is, usually, smaller than 5 cP and the coating obtained by using this coating agent is several microns at the greatest. Therefore, the photochromic composition used in the present invention is highly viscous as

compared to the above coating agent, and the photochromic coating that is obtained is very thick, too.

There is no particular limitation on the means of applying the photochromic composition and any known method can be used, such as spin-coating method, spray-coating method, dip-coating method or dip-spin-coating method.

In the present invention, the above photochromic composition is applied onto the primary coating of the half-cured state and, hence, the surfaces of the thermoplastic resin base material are protected by the primer coating. Upon applying the photochromic composition, therefore, the surfaces of the base material are effectively suppressed from whitened or swollen.

- Step of final curing -

The photochromic composition applied onto the primer coating of the half-cured state as described above, is polymerized and cured again to finally cure the primer coating in the half-cured state thereby to form a crosslinked resin layer. At the same time, the photochromic composition is polymerized and cured to form the photochromic coating.

As for the curing method, either the photocuring method or the thermal curing method is suitably employed depending upon the kind of the radical polymerization initiator blended in the photochromic composition. From the standpoint of properties of the coating that is obtained, appearance thereof and of completely curing the primer coating, it is desired to effect the curing by the irradiation with light by using a photopolymerization initiator and by employing a method of completing the curing by heating. In this case, therefore, it is desired to use a photopolymerization initiator and a thermal polymerization initiator as the polymerization initiator in the photochromic composition.

As a source of light for photocuring, there can be used a lamp having electrodes, such as metal halide lamp, ultrahigh-pressure mercury lamp, high-pressure mercury lamp, medium-pressure mercury lamp, sterilizing lamp, xenon lamp, carbon arc, or tungsten lamp, or a lamp without electrode. Further, an electron ray may be used as a source of light. In this case, the photochromic composition can be cured without being blended with the photopolymerization initiator.

As the thermally curing method, further, there can be exemplified a method of thermal polymerization by heating in a polymerization furnace and a method of curing by polymerization by irradiating infrared rays in the polymerization furnace. When the thermal curing is to be effected, however, it is necessary that the polymerizing temperature is so set (e.g., not higher than 130°C) that the base material is not thermally deformed.

Thus, the primer coating in the half-cured state is finally cured and the photochromic composition is cured by polymerization at one time, whereby the polymer molecules entangle and the chemical bonds take place between the crosslinked resin layer and the photochromic coating enabling the adhesiveness to be greatly enhanced between the two layers.

(Photochromic Laminate)

The photochromic laminate obtained by the above method is of a laminated structure having the photochromic coating formed, via the crosslinked resin layer, on the surfaces of the base material of a light-transmitting thermoplastic resin as represented by a polycarbonate resin.

The crosslinked resin layer interposed between the base material and the photochromic layer contains inorganic colloidal particles in an amount of 20 to 40% by mass and, particularly, 25 to 35% by mass, and has a thickness of, usually, 0.1 to 20 μm, preferably, 0.5 to 15 μm and, more preferably, 1 to 5 μm. Upon forming the photochromic coating via the crosslinked resin layer, the surfaces of the base member are suppressed from being whitened or swollen, optical properties of the base material are prevented from being deteriorated, and excellent light-transmitting properties of the base material are not impaired at all. In the crosslinked resin layer, in particular, the inorganic colloidal particles are chemically bonded to the resin component that serves as a matrix exhibiting a very increased effect for protecting the crosslinked resin layer and reliably suppressing the surfaces of the base member from being deteriorated at the time of applying the photochromic composition.

The chemical bond between the inorganic colloidal particles and the resin component can be confirmed by, for example, observing the interfacial state between the two on the broken section of the crosslinked resin layer by using an electron microscope. When no chemical bond has been formed, the surfaces of the inorganic colloidal particles are directly exposed and the phase separation structure is observed. When the chemical bond has been formed, the surfaces of the inorganic colloidal particles are covered with the resin, and there is observed a structure in which the inorganic colloidal particles are dissolved in the other resin component without separation in the phase.

As described already, the photochromic coating formed on the crosslinked resin layer has a thickness which is, usually, 10 to 100 μm and, particularly, 20 to 50 μm, and includes the photochromic compound. The thus formed layer exhibits photochromic properties, developing a predetermined color upon the irradiation with light such as ultraviolet rays and fading when no longer irradiated with light. In particular, as will be demonstrated later in Examples appearing later, the photochromic laminate of the present invention features a very large adhesiveness between the photochromic coating and the crosslinked resin layer. When, for example, the photochromic laminate is immersed in water boiling at

100°C for 1 hour and is, thereafter, held in an atmosphere of 20°C for 30 minutes, the peeling strength between the photochromic coating and the crosslinked resin layer is not smaller than 95/100 and, particularly, is not smaller than 98/100 as judged by a tessellate-peeling testing using a tape (JIS D 0202-1988). Accordingly, the photochromic laminate features excellent durability and exhibits photochromic properties over extended periods of time.

The photochromic laminate of the present invention can be directly used, for example, as photochromic spectacle lenses by using lenses as the base material. As required, however, it is desired that the photochromic laminate of the invention is used being covered with a hard coating. Upon being covered with the hard coating, the scratch resistance can be improved. There can be used any known hard coating without limitation, such as the one obtained by applying and curing a silane coupling agent or a hard coating agent which contains, as a chief component, a sol of an oxide of silicon, zirconium, antimony or aluminum, or the one obtained by applying and curing a hard coating agent which contains an organic high molecular material as a chief component. By using a hard coating agent containing a silyl monomer, in particular, there is easily accomplished a strong and sufficient adhesiveness.

As required, further, it is allowable to effect the working and secondary treatment such as anti reflection treatment and antistatic treatment by vacuum evaporating a thin film of a metal oxide such as $SiO_2$, $TiO_2$ or $ZrO_2$, or by applying an organic high molecular material, on the hard coating.

(Examples)

The present invention will now be described by way of Examples and Comparative Examples to which only, however, the invention is in no way limited.

Further, described below are a variety of polymerizable compounds used in Examples.

<Polymerizable compounds>

*MACO: Acrylated colloidal silica.

One gram of a γ-methacryloyloxypropyltrimethoxysilane was added to 16.6 g of colloidal silica in 50 g of t-butanol and was reacted at 83°C for 5 minutes according to a method described in Example 1 of USP 4,455,205. After the reaction, the reaction system was cooled and the solvent was distilled off to obtain an object product.

*U4HA: Tetrafunctional urethane acrylate (molecular weight, 496, produced by Shin-Nakamura Kagaku Co.).

*UA4100: Bifunctional urethane acrylate (molecular weight, 1200, produced by Shin-Nakamura Kagaku Co.).

*TSL8370: γ-Methacryloyloxypropyltrimethoxysilane A-200: Ethylene glycol diacrylate (average molecular weight, 308).

BPE 10: 2,2-Bis(4-methacryloyloxypentaethoxyphenyl)propane.

A-400: Polyethylene glycol diacrylate (average molecular weight, 532).

TMPT: Trimethylolpropane trimethacrylate.

EB1830: Polyesteroligomer hexaacrylate (produced by Dycell UCB Co.).

GMA: Glycidyl methacrylate.

BMI: 4,4'-Diphenylmethane bismaleimide.

PFR: Aromatic isocyanate
polyetherpolyolurethaneoligomer (molecular weight, 5000).

34EN: Aliphatic isocyanate
polyetherpolyolurethaneoligomer (molecular weight, 3000).

<Amine compounds>

*NMDEA: N-Methyldiethanolamine.

<Photopolymerization Initiator>

*CGI1800: A mixture of a 1-hydroxycyclohexylphenyl ketone and a bis(2,6-dimethoxybenzoyl)-2,4,4'-trimethyl-pentyl phosphinoxide (weight ratio, 3:1).

<Thermal Polymerization Initiator>

*Perbutyl IB: t-Butylperoxyisobutylate (trade name: Perbutyl IB, produced by Nihon Oil Fat Co.)

(Example 1)

<Forming the Primer Coating>

As a base material of lens, there was used a polycarbonate lens material. A photocurable hard coating agent "UVHC1105" (content of colloidal silica: 30% by weight) produced by GE Toshiba Silicone Co. was applied as a curable primer composition (primer solution) onto the surfaces of the base material by the spin-coating method by using a spin coater 1H-DX2 manufactured by MIKASA Co., such that the film thickness was 2 μm. Thereafter, the curable primer composition was half-cured by being irradiated with light from a 120-watt metal halide lamp in a nitrogen atmosphere for 2 minutes to prepare a lens material having a primer coating in the half-cured state containing colloidal silica in an

amount of 30% by mass. Properties of the thus obtained primer coating were evaluated by the methods described below.

<Evaluation of properties of the primer coating>

(a) Evaluation of the conversion.

The lens material having the primer coating in the half-cured state was immersed in methylene chloride for two days to extract the unreacted monomer from the primer coating. The extracted monomer was identified and determined by using a gas chromatography and a high precision liquid chromatography, to find the sum of the unreacted monomer and to calculate the conversion according to the following formula,

$$\text{Conversion (\%)} = (\text{Total weight (g) of the extracted monomer})/(\text{weight (g) of the monomer applied onto the lens before being polymerized}) \times 100$$

As a result, the degree of polymerization was 90%.

(b) Evaluation of the adhesiveness between the base material and the primer coating.

The lens material having the primer coating was immersed in water boiling at 100°C for 1 hour and was, thereafter, held in an atmosphere of 20°C for 30 minutes to conduct the tessellate-peeling testing using a tape in compliance with the JIS D 0202-1988. A cellophane tape (CT24 produced by Nichiban Co.) was intimately adhered onto the surface of the primer coating being pressed by the bulb of a finger and was, then, peeled off. The judgment was based on the number of squares that were not peeled off among 100 squares. That is, 100/100 stands for a case when the primer coating was not at all peeled off and 0/100 stands for a case when the primer coating was completely peeled off.

The adhesiveness between the primer coating formed by the above method and the lens material was 100/100.

<Forming the photochromic coating>

As a pretreatment, the surface of the primer coating was treated by using a corona treatment apparatus, Multidyne, manufactured by Navitus Co. for forming the photochromic coating.

Next, BPE10/A-400/TMPT/EB1830/GMA which are the radically polymerizable monomers were blended at a ratio of 50 parts by weight/15 parts by weight/15 parts by weight/10 parts by weight/10 parts by weight to prepare a mixture of the radically polymerizable monomers. To 100 parts by weight of this mixture, there were added a photochromic compound (A) having a structure represented by the following formula in an amount of 2.35 parts by weight, a photochromic compound (B) having a structure represented by the following formula in an amount of 0.6 parts by weight, and a photochromic compound (C) having a structure represented by the following formula in an amount of 0.4 parts by weight, and were all mixed together to a sufficient degree.

Photochromic compound (A):

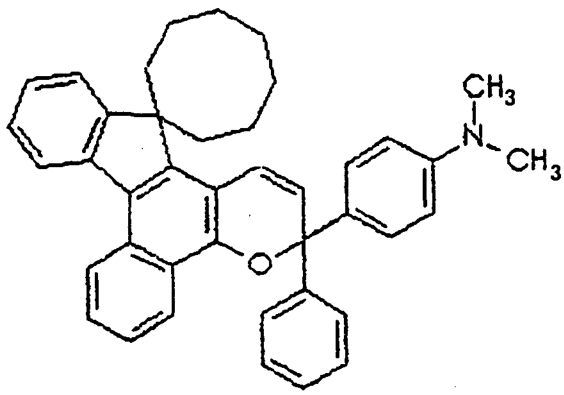

Photochromic compound (B):

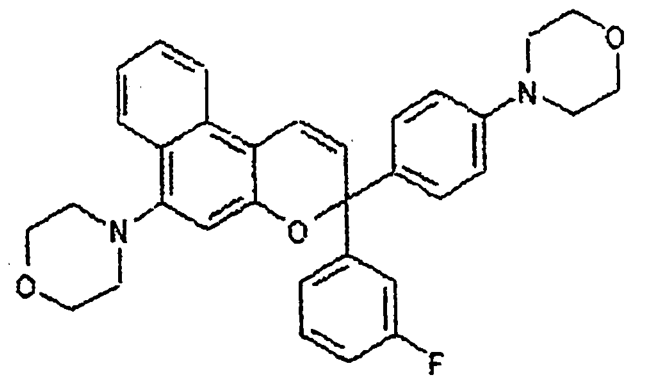

Photochromic compound (C):

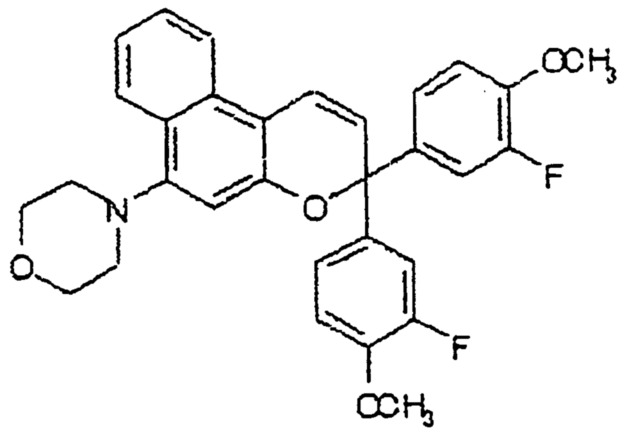

Next, to the obtained mixture, there were added 0.5 parts by weight of a CGI 1800 which is a polymerization initiator, 5 parts by weight of a bis(1,2,2,6,6-pentamethyl-4-piperidyl)sebacate which is a stabilizer, 7 parts by weight of a y-methacryloyloxypropyltrimethoxysilane which is a silane coupling agent, 1.5 parts by weight of a 4,4'-diphenylmethanebismaleimide and 3 parts by weight of an N-methyldiethanolamine, and were all mixed together to a sufficient degree to prepare a polymerizable photochromic composition (photochromic agent composition).

About 2 g of the thus obtained photochromic agent composition was applied by spin-coating onto the surfaces of the lens material having the primer coating in the half-cured state by using a spin coater, 1H-DX2, manufactured by MIKASA Co. The lens material of which the surfaces have been coated was irradiated with light from a metal halide lamp of an output of 120 mW/cm$^2$ for 3 minutes in a nitrogen gas atmosphere to form a photochromic coating. Through the above curing treatment, the primer coating in the half-cured state was finally cured to form a crosslinked resin layer, thereby to produce a photochromic laminate. The thickness of the obtained photochromic coating could be adjusted depending upon the spin-coating conditions. In this Example, the thickness of the photochromic coating was adjusted to be 40 $\pm$ 1 $\mu$m.

Properties (appearance, cloudiness and adhesiveness) of the photochromic coating on the surfaces of the thus obtained photochromic laminate (on the surfaces of the crosslinked resin layer) were evaluated by the methods described below.

<Evaluation of properties of the photochromic coating>

(a) Evaluation of appearance.

Appearance of the photochromic laminate having the photochromic coating formed on the surfaces of the polycarbonate lens material via the crosslinked resin layer was evaluated by irradiating the lens material with light from

a projector thereby to observe and evaluate the projected surface. Described below are references of evaluation.
◎: Flat and no ruggedness at all.
O: Very fine ruggedness is observed.
Δ: Ruggedness is locally observed.
×: Ruggedness is constantly observed or the base material is affected.

Appearance of the lens material prepared by the above method was evaluated to be ◎.

(b) Evaluation of cloudiness.

By using the projector, cloudiness of the lens material was examined by eyes. References of evaluation were classified into the following items.
O: No cloudiness.
Δ: Cloudiness is locally observed.
X: Whitened as a whole.

(C) Evaluation of adhesiveness between the photochromic coating and the crosslinked resin layer.

The adhesiveness was evaluated by the same method as the one for evaluating the adhesiveness between the lens material and the primer coating. As a result, the adhesiveness between the photochromic coating and the crosslinked resin layer was 100/100.

The composition of the curable primer composition (primer solution) used for forming the crosslinking resin layer and the half-curing condition in Example 1 were as shown in Table 1, and the composition of the photochromic agent composition that was used and the pretreating conditions were as shown in Table 2. Further, the conversion of the primer coating, and evaluated results of properties of the primer coating and of the photochromic coating (photochromic layer) were as shown in Table 3.

(Example 2)

A photochromic laminate was produced by forming a photochromic coating on the surfaces of a lens material via the crosslinked resin layer in the same manner as in Example 1 with the exception of using, as the primer solution, a photocurable hard coating agent "UVHC8558" produced by GE Toshiba Silicone Co. to form a crosslinked resin layer containing 30% by weight of colloidal silica. The laminate was evaluated for its properties in the same manner as in Example 1.

The composition of the curable primer composition and the half-curing condition were as shown in Table 1, the composition of the photochromic agent composition and the pretreating conditions were as shown in Table 2, and the conversion of the primer coating, and evaluated results of properties of the primer coating and of the photochromic layer were as shown in Table 3.

(Examples 3 to 18)

Photochromic laminates were produced in the same manner as in Example 1 but using the photochromic agents of the compositions shown in Table 2 instead of using the curable primer composition and curing conditions shown in Table 1. The laminates were evaluated for their properties in the same manner as in Example 1.

The compositions of the curable primer compositions and the half-curing conditions were as shown in Table 1, the compositions of the photochromic agent compositions and the pretreating conditions were as shown in Table 2, and the conversion of the primer coatings, and evaluated results of properties of the primer coatings and of the photochromic layers were as shown in Table 3.

(Comparative Example 1)

A primer coating containing colloidal silica in an amount of 50% by weight was formed by applying, as a primer solution, a heat-curable hard coating agent "NSC1274" (content of silica: 50% by weight) produced by Nihon Seikasha Co., onto the surfaces of the polycarbonate lens material used in Example 1 maintaining a film thickness of 2 μm, followed by curing under the conditions of 110°C for one hour. Thereafter, a photochromic coating was formed to form a photochromic laminate in the same manner as in Example 1, and properties were evaluated in the same manner as in Example 1 (appearance of the photochromic coating was evaluated to be X, and the adhesiveness, too, was evaluated to be X).

The composition of the curable primer composition and the half-curing condition were as shown in Table 1, the

composition of the photochromic agent composition and the pretreating conditions were as shown in Table 2, and the conversion of the primer coating, and evaluated results of properties of the primer coating and of the photochromic layer were as shown in Table 3.

(Comparative Example 2)

A photochromic laminate was produced without forming the primer coating but forming the photochromic coating directly on the surfaces of the polycarbonate lens material by the same method as that of Example 1, and the photochromic coating (photochromic layer) was evaluated for its properties. The results were as shown in Table 3. The photochromic coating was whitened and its adhesiveness was X.

(Comparative Examples 3 and 4)

Photochromic laminates were produced in the same manner as in Example 1 but using the photochromic agents of the compositions shown in Table 2 instead of using the curable primer composition and curing conditions shown in Table 1. The laminates were evaluated for their properties in the same manner as in Example 1.

The compositions of the curable primer compositions and the half-curing conditions were as shown in Table 1, the compositions of the photochromic agent compositions and the pretreating conditions were as shown in Table 2, and the conversion of the primer coatings, and evaluated results of properties of the primer coatings and of the photochromic layers were as shown in Table 3.

Table 1

| Ex.No. | Crosslinked resin layer | | Curing atmosphere | UV-ray irradiation time (min) |
|---|---|---|---|---|
| | Silica content (%) | Curable primer compositions | | |
| 1 | 30 | UVHC1105 | nitrogen | 2 |
| 2 | 30 | UVHC8558 | nitrogen | 2 |
| 3 | 30 | UVHC1105 | air | 0.5 |
| 4 | 30 | UVHC8558 | air | 0.5 |
| 5 | 30 | UVHC1105 | air | 0.5 |
| 6 | 30 | UVHC8558 | air | 0.5 |
| 7 | 30 | UVHC1105 CGI1800=0.2 | air | 0.5 |
| 8 | 25 | MACO/U4HA/A-200/=30/50/20 CGI1800=1 | air | 0.5 |
| 9 | 25 | MACO/UA4100/A-200/=30/50/20 CGI1800=1 | air | 0.5 |
| 10. | 25 | MACO/UA4100/A-200/=30/50/20 CGI1800=1 | air | 0.5 |
| 11 | 25 | MACO/EB1830/A-200=30/50/20 CGI1800=1 | air | 0.5 |
| 12 | 25 | MACO/TMPT/A-400=30/20/30 CGI1800=1 | air | 0.5 |
| 13 | 20 | MACO/PFR/A-200=25/50/25 CGI1800=0.5 | air | 0.5 |
| 14 | 20 | MACO/34EN/A-200=25/50/25 CGI1800=0.5 | air | 0.3 |
| 15 | 20 | UVHC1105/PFR=70/30 | air | 0.3 |
| 16 | 20 | UVHC8558/34EN=70/30 | air | 0.3 |
| 17 | 20 | UVHC1105/UA4100=70/30 | air | 0.3 |
| 18 | 30 | UVHC1105 PerbutylIB=0.3 | air | 0.5 |

(continued)

| Comp.Ex.No. | | | | |
|---|---|---|---|---|
| 1 | 50 | NSC1274 | air | heat-cured |
| 2 | 0 | without primer | -- | -- |
| 3 | 50 | MACO/U4HA/A-200=60/20/20 CGI1800=1 | air | 0.5 |
| 4 | 0 | U4HA/A-200=50/50 CGI1800=1 | air | 0.5 |

Table 2

| Ex.No. | Pretreatment before applying photochromic agent | Photochromic agent composition (parts by weight) | | |
|---|---|---|---|---|
| | | Monomer composition | Amine | |
| | | | Kind | Amount (parts by wt.) |
| 1 | corona treatment | BPE10/A-400/TMPT/EB1830/GMA=50/15/15/10/10 | NMDEA | 3 |
| 2 | corona treatment | BPE10/A-400/TMPT/EB1830/GMA=50/15/15/10/10 | NMDEA | 3 |
| 3 | no | BPE10/A-400/TMPT/EB1830/GMA=50/10/15/15/10 | NMDEA | 3 |
| 4 | no | BPE10/A-400/TMPT/EB1830/GMA=50/10/15/15/10 | NMDEA | 3 |
| 5 | no | BPE10/A-400/TMPT/EB1830/GMA=50/10/15/15/10 | no | - |
| 6 | no | BPE10/A-400/TMPT/EB1830/GMA=50/10/15/15/10 | no | - |
| 7 | no | BPE10/A-400/TMPT/EB1830/GMA=50/10/15/15/10 | no | - |
| 8 | no | BPE10/A-400/TMPT/EB1830/GMA=50/10/15/15/10 | no | - |
| 9 | no | BPE10/A-400/TMPT/EB1830/GMA=50/10/15/15/10 | no | - |
| 10 | no | BPE10/A-400/TMPT/EB1830/GMA=50/10/15/15/10 | NMDEA | 3 |
| 11 | no | BPE10/A-400/TMPT/EB1830/GMA=50/10/15/15/10 | NMDEA | 3 |
| 12 | no | BPE10/A-400/TMPT/EB1830/GMA=50/10/15/15/10 | NMDEA | 3 |
| 13 | no | BPE10/A-400/TMPT/EB1830/GMA=50/10/15/15/10 | NMDEA | 3 |
| 14 | corona treatment | BPE10/A-400/TMPT/EB1830/GMA=50/10/15/15/10 | NMDEA | 3 |
| 15 | no | BPE10/A-400/TMPT/EB1830/GMA/BMI=50/15/15/10/8/2 | NMDEA | 3 |
| 16 | no | BPE10/A-400/TMPT/EB1830/GMA/BMI=50/15/15/10/8/2 | NMDEA | 3 |
| 17 | no | BPE10/A-400/TMPT/EB1830/GMA/BMI=50/15/15/10/8/2 | NMDEA | 3 |
| 18 | no | BPE10/A-400/TMPT/EB1830/GMA=50/10/15/15/10 | no | - |

(continued)

| Comp.Ex.No. | | | | |
|---|---|---|---|---|
| 1 | corona treatment | BPE10/A-400/TMPT/EB1830/GMA=50/10/15/15/10 | NMDEA | 3 |
| 2 | no | BPE10/A-400/TMPT/EB1830/GMA=50/10/15/15/10 | NMDEA | 3 |
| 3 | no | BPE10/A-400/TMPT/EB1830/GMA=50/10/15/15/10 | no | - |
| 4 | no | BPE10/A-400/TMPT/EB1830/GMA=50/10/15/15/10 | no | - |

Table 3

| Ex.No. | conversion (%) | Adhesiveness between primer coating and lens material | Appearance after photochromic layer is formed | Cloudiness | Adhesiveness between photochromic layer and crosslinked resin layer |
|---|---|---|---|---|---|
| 1 | 95 | 100/100 | ◎ | O | 98/100 |
| 2 | 95 | 100/100 | ◎ | O | 98/100 |
| 3 | 85 | 100/100 | ◎ | O | 100/100 |
| 4 | 85 | 100/100 | ◎ | O | 100/100 |
| 5 | 85 | 100/100 | ◎ | O | 100/100 |
| 6 | 85 | 100/100 | ◎ | O | 100/100 |
| 7 | 85 | 100/100 | ◎ | O | 100/100 |
| 8 | 85 | 100/100 | ◎ | O | 100/100 |
| 9 | 85 | 100/100 | ◎ | O | 100/100 |
| 10 | 85 | 100/100 | ◎ | O | 100/100 |
| 11 | 85 | 96/100 | ◎ | O | 96/100 |
| 12 | 85 | 95/100 | ◎ | O | 95/100 |
| 13 | 85 | 99/100 | ◎ | O | 99/100 |
| 14 | 88 | 98/100 | ◎ | O | 98/100 |
| 15 | 88 | 100/100 | ◎ | O | 100/100 |
| 16 | 88 | 100/100 | ◎ | O | 100/100 |
| 17 | 88 | 100/100 | ◎ | O | 100/100 |
| 18 | 87 | 100/100 | ◎ | O | 100/100 |
| Comp.Ex.No. | | | | | |
| 1 | -- | 0/100 | × | O | 0/100 |
| 2 | -- | -- | × | × | 0/100 |
| 3 | 90 | 60/100 | Δ | O | 50/100 |
| 4 | 90 | 100/100 | × | × | 0/100 |

According to the present invention, photochromic properties can be imparted by forming, by a coating method, a photochromic coating on a base material having a surface made of a light-transmitting thermoplastic resin without deteriorating the optical properties of the base material. Besides, the base material and the photochromic coating can be strongly adhered together. Further, the photochromic laminate of the present invention has excellent features such as good optical properties, good photochromic properties and favorable adhesiveness among the layers, and can be suitably used as, for example, photochromic spectacle lenses.

## Claims

1. A photochromic laminate comprising a base material of a thermoplastic resin having light-transmitting property, which thermoplastic resin is a polycarbonate, a crosslinked resin layer formed on the surfaces of said base material and containing inorganic colloidal particles in an amount of 20 to 40% by mass, and a photochromic coating formed on the surfaces of said crosslinked resin layer.

2. A photochromic laminate according to claim 1, wherein said base material is a lens.

3. A method of producing a photochromic laminate comprising the steps of:

   - preparing a curable primer composition of the nonsolvent type containing inorganic colloidal particles having a radically polymerizable group introduced onto the surfaces thereof in an amount of 20 to 40% by mass calculated as an inorganic metal oxide and, further, containing a polyfunctional radically polymerizable monomer;
   - forming a primer coating on the surfaces of a base material of a thermoplastic resin having light-transmitting property, which thermoplastic resin is a polycarbonate, by applying said curable primer composition thereon;
   - half-curing said primer coating;
   - applying a polymerizable photochromic composition containing a photochromic compound and a radically polymerizable monomer on the primer coating in the half-cured state; and
   - forming a photochromic coating on the surfaces of the base material via a crosslinked resin layer by completely curing said primer coating in the half-cured state and polymerizing the polymerizable photochromic composition.

4. A method of producing a photochromic laminate according to claim 3, wherein the surfaces of the primer coating in the half-cured state is subjected to the surface treatment for introducing active groups or to the physical etching treating prior to applying said polymerizable photochromic composition thereon.

5. A method of producing a photochromic laminate according to claim 3, wherein said curable primer contains an urethane oligomer in an mount of 5 to 60% by mass.

## Patentansprüche

1. Photochromes Laminat, umfassend ein Grundmaterial aus einem thermoplastischen Harz mit lichtdurchlässiger Beschaffenheit, wobei es sich beim thermoplastischen Harz um ein Polycarbonat handelt, eine auf den Oberflächen des Grundmaterials gebildete vernetzte Harzschicht, die anorganische, kolloidale Teilchen in einer Menge von 20 bis 40 Masse-% enthält, und eine auf den Oberflächen der vernetzten Harzschicht gebildete photochrome Beschichtung.

2. Photochromes Laminat nach Anspruch 1, wobei es sich beim Grundmaterial um eine Linse handelt.

3. Verfahren zur Herstellung eines photochromen Laminats, umfassend die folgenden Stufen:

   - eine härtbare Primerzusammensetzung vom Nicht-Lösungsmitteltyp wird hergestellt, die anorganische, kolloidale Teilchen mit einer auf deren Oberflächen eingeführten radikalisch polymerisierbaren Gruppe in einer Menge von 20 bis 40 Masse-%, berechnet als anorganisches Metalloxid, und ferner ein polyfunktionelles, radikalisch polymerisierbares Monomeres enthält;
   - auf den Oberflächen eines Grundmaterials aus einem thermoplastischen Harz mit lichtdurchlässiger Beschaffenheit, wobei es sich bei dem thermoplastischen Harz um ein Polycarbonat handelt, wird eine Primerbeschichtung durch Auftragen der härtbaren Primerzusammensetzung gebildet;
   - die Primerbeschichtung wird halb gehärtet;
   - eine polymerisierbare, photochrome Zusammensetzung, die eine photochrome Verbindung und ein radikalisch polymerisierbares Monomeres enthält, wird auf die Primerbeschichtung im halb gehärteten Zustand aufgebracht; und
   - eine photochrome Beschichtung wird auf den Oberflächen des Grundmaterials über eine vernetzte Harzschicht gebildet, indem man die Primerbeschichtung im halb gehärteten Zustand vollständig härtet und die polymerisierbare, photochrome Zusammensetzung polymerisiert.

4. Verfahren zur Herstellung eines photochromen Laminats nach Anspruch 3, wobei die Oberflächen der Primerbeschichtung im halb gehärteten Zustand einer Oberflächenbehandlung zur Einführung von aktiven Gruppen oder einer physikalischen Ätzung unterzogen werden, bevor die polymerisierbare, photochrome Zusammensetzung aufgebracht wird.

**5.** Verfahren zur Herstellung eines photochromen Laminats nach Anspruch 3, wobei der härtbare Primer ein Urethan-Oligomeres in einer Menge von 5 bis 60 Masse-% enthält.

**Revendications**

**1.** Stratifié photochromique comprenant un matériau de base en une résine thermoplastique ayant une propriété de transmission de la lumière, laquelle résine thermoplastique est un polycarbonate, une couche de résine réticulée formée sur les surfaces dudit matériau de base et contenant des particules colloïdales inorganiques dans une quantité de 20 à 40 % en masse, et un revêtement photochromique formé sur les surfaces de ladite couche de résine réticulée.

**2.** Stratifié photochromique selon la revendication 1, dans lequel ledit matériau de base est une lentille.

**3.** Procédé de production d'un stratifié photochromique comprenant les étapes suivantes :

- préparer une composition de primaire durcissable du type non-solvant contenant des particules colloïdales inorganiques ayant un groupe polymérisable par voie radicalaire introduit sur les surfaces de celles-ci dans une quantité de 20 à 40 % en masse calculée comme un oxyde métallique inorganique et, en outre, contenant un monomère polyfonctionnel polymérisable par voie radicalaire ;
- former un revêtement primaire sur les surfaces d'un matériau de base en résine thermoplastique ayant une propriété de transmission de la lumière, laquelle résine thermoplastique est un polycarbonate, en appliquant ladite composition primaire durcissable sur celui-ci ;
- semi-durcir ledit revêtement primaire ;
- appliquer une composition photochromique polymérisable contenant un composé photochromique et un monomère polymérisable par voie radicalaire sur le revêtement primaire dans l'état semi-durci ; et
- former un revêtement photochromique sur les surfaces du matériau de base via une couche de résine réticulée en durcissant complètement ledit revêtement primaire dans l'état semi-durci et en polymérisant la composition photochromique polymérisable.

**4.** Procédé de production d'un stratifié photochromique selon la revendication 3, dans lequel les surfaces du revêtement primaire dans l'état semi-durci sont soumises au traitement de surface pour introduire des groupes actifs, ou au traitement de gravure physique avant d'appliquer ladite composition photochromique polymérisable sur celles-ci.

**5.** Procédé de production d'un stratifié photochromique selon la revendication 3, dans lequel ledit primaire durcissable contient un oligomère d'uréthanne dans une quantité de 5 à 60 % en masse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9837115 B
- US 5914174 A
- US 0102449 A
- US 0036047 A
- WO 9830923 A
- JP 6099577 B
- US P4486504 A
- US P4478876 A
- US 4455205 A